# EUROPEAN PATENT APPLICATION

(11) **EP 1 205 909 A1**
(43) Date of publication of application: **15.05.2002**
(21) Application number: 00951881.2
(22) Date of filing: 03.08.2000
(51) Int. Cl.: G11B 5/09, H04N 5/782

(54) **MAGNETIC RECORDER/REPRODUCER**

(30) Priority: 05.08.1999 JP 22258799
(71) Applicant: MATSUSHITA ELECTRIC INDUSTRIAL CO., LTD., Kadoma-shi, Osaka 571-8501 (JP)
(72) Inventor: TAKAHIRA, Ryoichi, Hirakata-shi, Osaka 573-1103 (JP)
(74) Representative: Urner, Peter, Dipl.-Phys.
(86) International application number: JP0005231
(87) International publication number: WO0111611

(57) **Abstract**

Input signal converting means (1, 2, 3, 10) converts an input signal into a recording signal through modulation carried out at a timing corresponding to a predetermined number of tracks per one section of a signal. Recording means (7, 8, 10) records the recording signal on a recording tape (α) by turning a head cylinder (8) at a rotational speed lower than that of the head cylinder (8) corresponding to the modulation timing.

## Description

### BACKGROUND OF THE INVENTION

### 1. Field of the Invention

The present invention relates to a magnetic recorder/reproducer which enables recording and reproduction using a recording tape or apparatus configuration not of high-recording-rate specifications.

### 2. Description of the Related Art

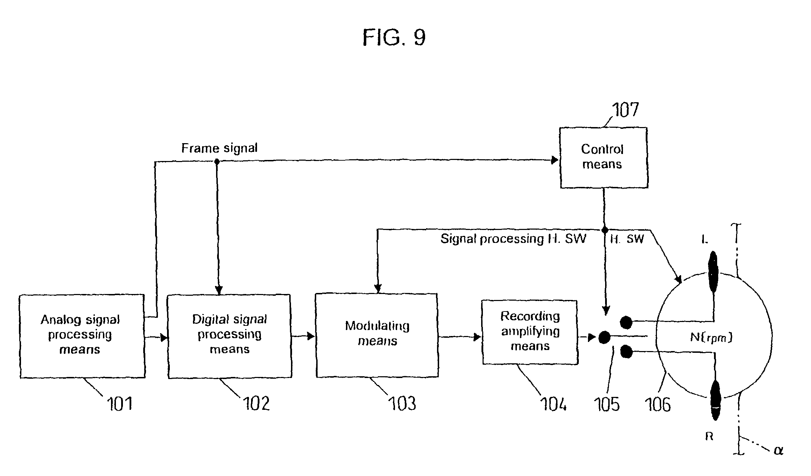

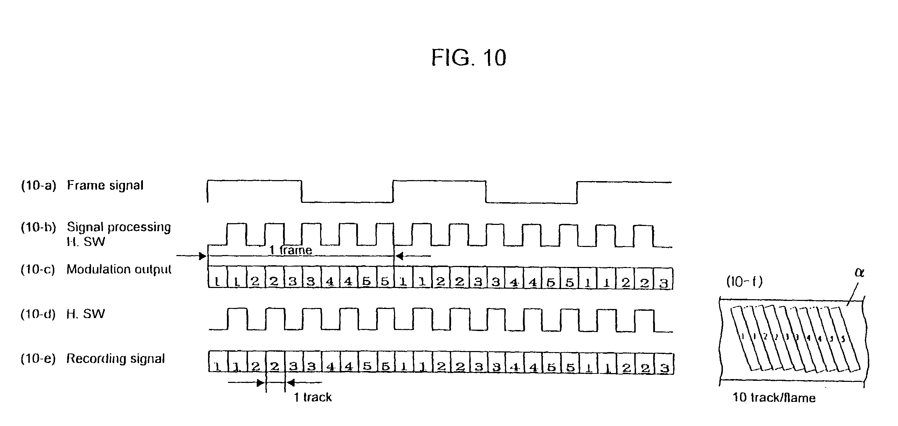

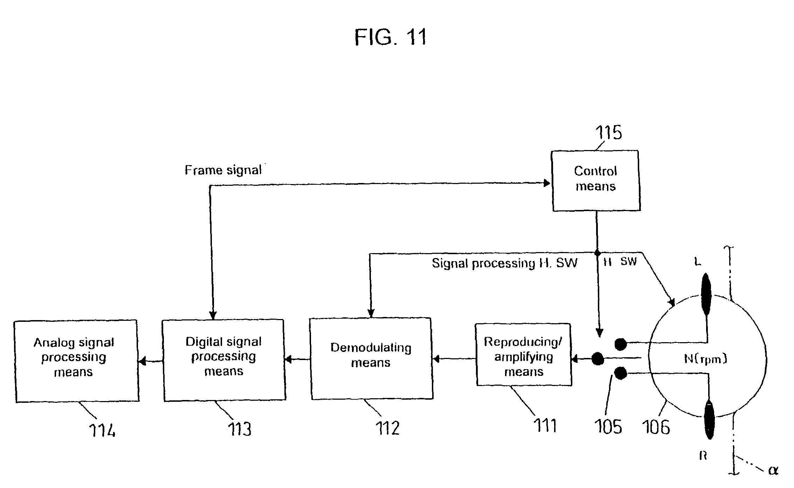

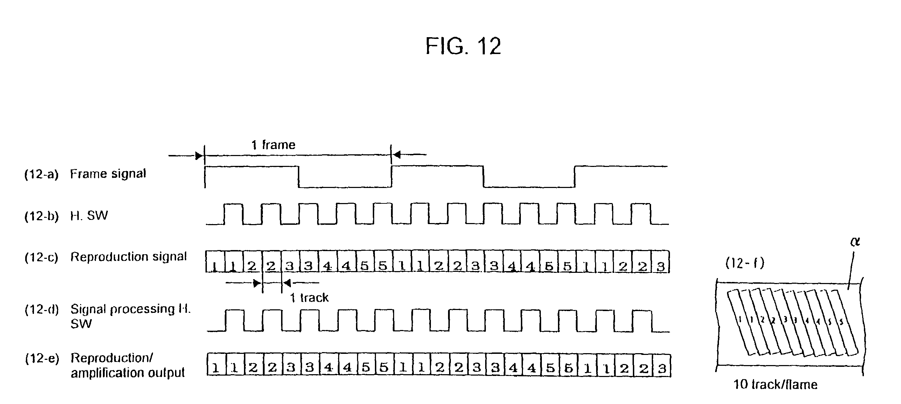

FIG. 9 shows a configuration required for recording in a prior art magnetic recorder/reproducer, FIG. 10 shows a timing chart for showing recording operations, FIG. 11 shows a configuration required for reproduction in the prior art magnetic recorder/reproducer, and FIG. 12 shows a timing chart for showing reproduction operations.

The configuration required for recording in this magnetic recorder/reproducer includes an analog signal processing means 101, a digital signal processing means 102, a modulating means 103, a recording/amplifying means 104, a head cylinder 106, a switching means 105, and a control means 107.

The analog signal processing means 101 performs analog processing and digital conversion processing on an incoming image input signal. The digital signal processing means 102 performs compression and error-correcting code addition processing on data digitized at the analog signal processing means 101. The modulating means 103 performs modulation processing on digital data after compression and error-correcting code addition processing so that it may be recorded on a recording tape α. The recording/amplifying means 104 amplifies an output of the modulating means 103. The head cylinder 106 serves to record an output of the recording/amplifying means 104 on the recording tape α. The switching means 105 serves to make switching between the right and left heads of head cylinder 106 to either one of which an output of the recording/amplifying means 104 is to be supplied. The control means 107 controls the operations of the configuration required for recording.

In FIG. 10, (10-a) indicates a frame signal contained in an image input signal. (10-b) indicates a signal processing H.SW signal for recording data on the recording tape α at a frequency five times as large as that of the frame signal (10-a). (10-c) indicates an output (hereinafter called modulation output) of the modulating means 103. (10-d) indicates an H.SW signal which is synchronized with the signal processing H.SW signal (10-b) and which has the same period as that thereof, for controlling switching at the switching means 105 and rotation of the head cylinder 106. A half period of the H.SW signal (10-d) corresponds to one track of the recording tape α. (10-e) indicates a recording signal recorded on the recording tape α. (10-f) indicates a conceptual diagram for showing tracks and frames recorded on the recording tape α.

The configuration required for reproduction in this magnetic recorder/reproducer includes a reproducing/amplifying means 111, a demodulating means 112, a digital signal processing means 113, an analog signal processing means 114, and a control means 115.

The reproducing/amplifying means 111 amplifies a reproduction signal taken in from the recording tape α through the head cylinder 106 and the switching means 105. The demodulating means 112 restores the reproduction signal. The digital signal processing means 113 performs decompression and error detecting processing on the restored reproduction signal. The analog signal processing means 114 provides an image signal fed out from the digital signal processing means 113 out of the apparatus. The control means 115 controls the operations of the above-mentioned configuration.

In FIG. 12, (12-a) indicates a frame signal at the time of reproduction. (12-b) indicates an H.SW signal which controls rotation of the head cylinder 106 and also half a period of which corresponds to one track of the recording tape α. (12-c) indicates a reproduction signal recorded on the recording tape α. (12-d) indicates a signal processing H.SW which is synchronized with the H.SW signal (12-c) and has the same period as that thereof. In this example, the frequency of the H.SW signal (12-b) and the signal processing H.SW signal (12-c) is set at five times that of the frame signal (12-a). (12-e) indicates a reproduction/amplification output fed out from the reproducing/amplifying means 114. (12-f) is a conceptual diagram for showing a track and a frame recorded on the recording tape α.

The magnetic recorder/reproducer having this configuration operates as follows. The following will describe the operations with reference to case where an image input signal of the NTSC broadcasting system is recorded and reproduced according to a track sectioning density of 10 tracks/frame of the general digital video signal specifications.

First, recording operations are described. The image input signal is input to the analog signal processing means 101, where it has its pedestal level fixed to a constant level and then is divided into a luminance signal, a color signal, and a color-difference signal. At the same time, the image input signal is converted into a digital signal. Then, the analog signal processing means 101 generates the frame signal (10-a) from the image input signal and supplies it to the digital signal processing means 102 and the control means 107. The frame signal (10-a) is specifically generated to provide a proper manipulation timing between the digital signal processing means 102 and the analog signal processing means 101 and also to provide a proper operational timing between a mechanism portion (the switching means 105, the head cylinder 106, etc.) and the analog signal processing means 101.

The control means 107, when having received this frame signal (10-a), generates based thereon the signal processing H.SW signal (10-b) indicating a timing for switching the head of the head cylinder 106 and supplies it to the modulating means 103. This is done so in order to control the timing more minutely. Similarly, the control means 107 generates the H.SW signal (10-d) which provides a reference for the number of rotations of the head and supplies it to the head cylinder 106 and the switching means 105. The H.SW signal (10-d) and the signal processing H.SW signal (10-b) have been set to be synchronized with each other and have the same period as mentioned above. The frequencies (numbers of rotations) of the signal processing H.SW signal (10-b) and the H.SW signal (10-d) are described later.

The digital image signal output from the analog signal processing means 101 undergoes compression and error-correcting code addition processing at the digital signal processing means 102 and then is modulated so as to provide an energy distribution corresponding to the properties of the recording tape α.

The modulation output (10-c) thus output from the modulating means 103 is supposed to correspond to a period (frequency) of the frame signal (10-a). That is, according to the NTSC broadcasting system, the frame signal (10-a) has a frequency of 29.97 Hz, so that by setting the frequency of the signal processing H.SW signal (10-b) at 149.85 Hz, five times the frequency of the frame signal (10-a), the output of the modulation output (10-c) matches a track sectioning density of 10 tracks/frame.

The recording/amplifying means 104 makes such settings of a recording current etc. of the modulation output (10-c) as to maximize the performance of the recording tape α. Then, the modulation output (10-c) having such settings is supplied to the switching means 105. The switching means 105 makes switching as described below according to the period of the H.SW signal (10-d). That is, the switching means 105 provides such control in switching as to supply the modulation output (10-c) alternately to the heads L and R (which are provided at the radial ends on the peripheral surface of the head cylinder 106) of the head cylinder 106. Its switching period is synchronized with a half the period of the H.SW signal (10-d).

The switching is thus performed by the switching means 105 and also the rotational speed of the head cylinder 106 is synchronized with the H.SW signal (10-d). That is, the H.SW signal (10-d) serves as a rotational reference for the head cylinder 106 and its half period corresponds to one track (record distribution of either head L or R). By writing the modulation signal (10-c) to the recording tape α in this state, it is recorded as the recording signal (10-e) on the recording tape α at five times the frequency of the image input signal.

There is also another prior art available for supplying an output of the recording/amplifying means 104 to the head cylinder 106 not via the switching means 105 of the former prior art. In this case, the modulation output (10-c) of the recording/amplifying means 104 is not supplied alternately by the switching means 105 to the head L and R of the head cylinder 106 according to the period of the H.SW signal (10-d) but supplied to the heads L and R of the head cylinder 106 simultaneously. In this case, the head cylinder 106 is rotating and therefore its heads L and R come in contact with the recording tape α alternately. This permits the recording signal (10-e) to be recorded at five times the frequency of the image input signal like in the case of the above-mentioned prior art.

The following will describe reproduction operations. Based on the frame signal (12-a) generated inside or outside the apparatus, the control means 115 generates the signal processing H.SW signal (12-d) indicating a head switching timing for the head cylinder 106 and the H.SW signal (12-b). Then, it supplies the signal processing H.SW signal (12-d) to the demodulating means 112 and the H.SW signal (12-b) to the head cylinder 106 and the switching means 105.

In this state, the head cylinder 106 is rotated to reproduce the recording signal (10-e) on the recording tape α. In this case, the number of rotations of the head cylinder 106 and the switching period of the switching means 105 are synchronized with the H.SW signal (12-b) to thereby reproduce the recording signal (10-e) in its signal form. That is, as mentioned above, the recording signal (10-e) is recorded on the recording tape α according to a track sectioning density of 10 tracks/frame. Accordingly, by setting the H.SW signal (12-b) to be supplied to the head cylinder 106 and the switching means 105 at five times [i.e., 149.85 Hz] the frequency of the frame signal (12-a) [29.94 Hz according to the NTSC broadcasting system], the recording signal (10-e) can be reproduced in a state as adapted to the track sectioning density (10 tracks/frame) to provide the reproduction signal (12-c), which is supplied to the reproduction/amplifying means 111.

The reproducing/amplifying means 111 performs amplification processing etc. on the incoming reproduction signal (12-c) and supplies reproduction/amplification output (12-e) to the demodulating means 112. The demodulating means 112 demodulates the incoming reproduction/amplification output (12-e) which has been modulated according to the properties of the recording tape α in recording and then supplies it to the digital signal processing means 113. In this case, the demodulating means 112 generates a demodulation output corresponding to the signal processing H.SW signal (12-d) [which is synchronized with the H.SW signal (12-b) and has the same period as that thereof], thus providing a demodulation output in a signal form according to a track sectioning density of 10 tracks/frame corresponding to the period of the frame signal (12-a).

The digital signal processing means 113 performs error-correcting, error modifying, and compressed-data decompressing processing on the incoming demodulation output and supplies it to the analog signal processing means 114. In this case, the digital signal processing means 113 performs signal processing in synchronization with the frame signal (12-a) supplied from the control means 115.

The analog signal processing means 114 converts the incoming output of the digital signal processing means 113 into an analog signal and outputs it to the outside of the apparatus as a reproduction image signal.

Thus operating prior art magnetic recorder/reproducer has the following problems. That is, as mentioned above, by the typical system of recording/reproducing a digital video signal, it is necessary to perform recording/reproducing operations at a high-track sectioning density of 10 tracks/frame, and, to satisfy this requirement, the head cylinder 106 must be rotated at a high speed of 149.85 Hz. To keep such a high rotational speed of the head cylinder 106 accurately, however, a high-precision mechanism is required, thus increasing the costs for manufacturing the magnetic recorder/reproducer.

Also, to keep a high precision of the mechanism for supporting the high-speed rotating head cylinder 106, its maintenance during operation takes much of labor necessarily, thus contributing to a rise in running cost of the magnetic recorder/reproducer.

Further, the recording tape α also must accommodate a high track sectioning density of 10 tracks/frame, thus contributing to a rise in its manufacturing costs.

Thus, the prior art magnetic recorder/reproducer itself as well as a recording tape are costly, which is combined with a high maintenance cost of the mechanism to discourage the user from buying the product, so that there has been a need for such a magnetic recorder/reproducer that is capable of digital recording and reproducing with inexpensive general-purpose tape and mechanism.

In view of the above, it is an object of the present invention to provide a digital recorder/reproducer which is inexpensive in manufacturing and maintenance.

### DISCLOSURE OF THE INVENTION

The digital recorder/reproducer according to the present invention includes an input signal converting means for modulating an input signal at a timing corresponding to a predetermined number of tracks per signal section to thereby convert it into a recording signal and a recording means for recording the recording signal in a recording tape as rotating a head cylinder at a rotational speed lower than such a rotational speed of the head cylinder that corresponds to the timing for the modulation, actually operating as follows.

That is, since the precision of the rotation mechanism for rotating the head cylinder that depends on the number of rotations of the head, the present invention provides such a configuration that sets the rotational speed of the head cylinder lower than a rotational speed prescribed at the time of generating the recording signal, thus enabling lower the precision required for that mechanism. Accordingly, thus lowered precision required for the mechanism of rotating the head cylinder reduce the costs.

Also, although it is necessary to conduct high-accuracy maintenance periodically to rotate the head cylinder at a high speed, the present invention need not conduct such maintenance to thereby reduce the costs because the present invention sets the rotational speed of the head cylinder lower than that corresponding to the above-mentioned modulation processing.

Also, the above-mentioned improved magnetic recorder/reproducer according to the present invention further includes a reproducing means for reproducing a recording signal recorded on the recording tape by rotating the head cylinder at a rotational speed of the head which is set by the recording means and an output signal converting means for converting the reproduction signal output from the reproducing means into an output signal by performing demodulation processing at a timing corresponding to the predetermined number of tracks per signal section, actually operating as follows.

That is, this configuration of the improved recorder/reproducer enables accurately reproducing a recording signal recorded on the recording tape. At the time of reproduction also, the rotational speed of the head cylinder can be lowered below a rotational speed prescribed when the recording signal or the output signal is generated, thus reducing the precision required by the head cylinder rotating mechanism. Accordingly, it is possible to lower the precision of this head cylinder rotating mechanism to thereby reduce the costs and also simplify the maintenance of the head cylinder, thus further reducing the costs.

In the improved magnetic recorder/reproducer of the present invention, the recording means has its recording tape transporting speed during recording adjusted corresponding to a set rotational speed of the head cylinder, thus actually operating as follows.

That is, if the rotational speed of the head cylinder is lowered at a constant tape transporting speed, the track pitch of recording tracks formed on the recording tape (spacing between the recording tracks which are adjacent in the longitudinal direction of the tape) is widened more than necessary to thereby elongate the recording tape required for recording, thus leading to a problem such as deterioration of the utilization efficiency of the tape. To solve this problem, the present invention adjusts (lowers) the tape transporting speed according to a possible decrease in the rotational speed of the head cylinder.

In the improved magnetic recorder/reproducer of the present invention, the recording means is supposed to set a rotational speed of the head cylinder such that one section of a signal may be subdivided into the number of deletion tracks which is set by dividing the predetermined number of tracks per section of the signal by an integer smaller than this number of tracks, thus specifically operating as follows.

That is, recording tracks which constitute each signal section on the recording tape are subdivided into a plurality of track-division regions. Accordingly, signal regions for a recording signal generated so as to be distributed for each recording track when the recording signal is generated are recorded and arranged on each of the track-division areas of each recording track. Therefore, the recording signals can be distributed accurately into those track-division regions on the recording tape, thus keeping a high recording accuracy.

This improved recorder/reproducer of the present invention further includes a first memory means, a first write control means for writing the recording signal in the first memory means at a write timing which corresponds to the predetermined number of tracks per signal section, and a first read control means for reading the recording signal stored in the first memory means at a read timing which corresponds to the number of deletion tracks and supplying it to the memory means, thus specifically operating as follows.

That is, this configuration of the present invention gives a difference between a rotational speed of the head cylinder that is assumed by the input signal converting means and an actual rotational speed during recording by the recording means. Accordingly, to accurately send a recording signal generated by the input signal converting means to the recording means and record it on the recording tape, it is necessary to individually adjust a timing for outputting the recording signal from the input signal converting means and a timing for inputting it to the recording means. To do so, the present invention provides the first memory means which serves as a buffer memory between the input signal converting means and the recording means also gives the write timing for writing the recording signal to the first memory means as the write timing which corresponds to the predetermined number of tracks per signal section. Further, the present invention gives the timing for reading the recording signal from this first memory means (timing controlled by the first read control means) as the read timing which corresponds to the number of deletion tracks. This enables transmitting and receiving the recording signal at a high accuracy between the input signal converting means and the recording means.

In the improved magnetic recorder/reproducer according to the present invention, the first write control means finely adjusts the write timing, specifically operating as follows.

That is, the first write control means can finely adjust the write timing to arbitrarily adjust the position of a track-subdivision region provided on the recording tape (a position of a track-subdivision region on the recording track, which indicates the data position). Accordingly, data can be arranged on the recording tracks so as to be easily acquired during, for example, searching not involving on-tracking when the data on the recording tape is reproduced.

In the improved magnetic recorder/reproducer according to the present invention, the first read control means finely adjusts the read timing, specifically operating as follows.

That is, the first read control means can finely adjust the read timing to arbitrarily adjust the position of a track-subdivision region provided on the recording tape (data position). Accordingly, data can be arranged on the recording tracks so as to be easily acquired during, for example, searching not involving on-tracking when the data on the recording tape is reproduced.

In the improved magnetic recorder/reproducer according to the present invention, the reproducing means adjusts the recording tape transporting speed during reproduction corresponding to a set rotational speed of the head cylinder, specifically operating as follows.

That is, the recording signal recorded on the recording tape can be reproduced at a high accuracy.

The improved magnetic recorder/reproducer according to the present invention further includes a second memory means, a second write control means for writing the reproducing signal to the second memory means at a write timing which corresponds to the number of deletion tracks, and a second read control means for reading the reproducing signal stored in the second memory means at a read timing which corresponds to the predetermined number of tracks per signal section and then supplying it to the output signal converting means, specifically operating as follows.

That is, this configuration of the present invention gives a difference between a rotational speed of the head cylinder assumed by the output signal converting means and an actual rotational speed during reproduction by the reproducing means. Accordingly, it is necessary to individually adjust a timing outputting the recording signal reproduced by the reproducing means and a timing for inputting it to the output signal converting means in order to send a reproduction output reproduced by the reproducing means at a high accuracy to the output signal converting means to thereby convert it into an output signal. To do so, the present invention provides the second memory means which serves as a buffer memory between the reproducing means and the output signal converting means and also provides a timing for writing the reproduction signal to the second memory means (timing controlled by the second write control means) as the write timing which corresponds to the number of deletion tacks. Further, the present invention provides a timing for reading the reproduction signal from this second memory means (timing controlled by the second read control means) as the read timing which corresponds to the predetermined number of tracks per signal section. This enables transmission and reception of the recording signal at a high accuracy between the reproducing means and the output signal converting means.

In the improved magnetic recorder/reproducer according to the present invention, the second write control means finely adjusts the write timing, specifically operating as follows.

That is, the second write control means can finely adjust the write timing to thereby restore the timing of a recording track on the recording tape finely adjusted during recording to its original timing and supply it to the output signal converting means. Accordingly, data can be arranged on the recording track so as to be easily acquired during, for example, searching not involving on-tracking when the data recorded on the recording track on the recording tape is reproduced.

In the improved magnetic recorder/reproducer according to the present invention, the second read control means finely adjusts the read timing, specifically operating as follows.

That is, the second read control means can finely adjust the read timing to thereby restore the timing of a recording track on the recording tape finely adjusted during recording to its original timing and supply it to the output signal converting means. Accordingly, data can be arranged on the recording track so as to be easily acquired during, for example, searching not involving on-tracking when the data recorded on the recording track on the recording tape is reproduced.

In the improved magnetic recorder/reproducer according to the present invention, the input signal converting means selectively takes out an input signal of each of a plurality of signal sections and converts it into the recording signal, specifically operating as follows. That is, this enables prolonged recording/reproducing such as that of frame skipping.

In the improved magnetic recorder/reproducer according to the present invention, the recording means records the recording signal on the recording tape in such a state that the recording rate of this recording signal is lowered by as much as an input signal of signal sections skipped by the input signal converting means, specifically operating as follows.

That is, the recording rate can be thus lowered during recording, thus enabling using a recording tape with a recording rate lowered by that much.

In the improved magnetic recorder/reproducer according to the present invention, the output signal converting means restores the recording rate lowered by the recording means to its original rate when converting the reproducing signal into the output signal, specifically operating as follows.

That is, it restores the recording rate to its original rate, thus enabling forming an output signal having the same signal form as that of the input signal.

### BRIEF DESCRIPTION OF THE DRAWINGS

FIG. 1 is an illustration for showing a configuration required for recording in a magnetic recorder/reproducer according to a first embodiment of the present invention;
FIG. 2 is a timing chart for describing recording operations by the first embodiment;
FIG. 3 is an illustration for showing a configuration required for reproduction by the first embodiment;
FIG. 4 is a timing chart for describing reproducing operations by the first embodiment;
FIG. 5 is an illustration for showing a construction required for recording by the magnetic recorder/reproducer according to a second embodiment of the present invention;
FIG. 6 is a timing chart for describing recording operations by the second embodiment;
FIG. 7 is an illustration for showing a configuration required for reproduction by the second embodiment;
FIG. 8 is a timing chart for describing reproducing operations by the second embodiment;
FIG. 9 is an illustration for showing a configuration required for recording by a prior art example of a magnetic recorder/reproducer;
FIG. 10 is a timing chart for describing recording operations by the prior art example;
FIG. 11 is an illustration for showing a configuration required for reproduction by the prior art example; and
FIG. 12 is a timing chart for describing reproducing operations by the prior art example.

### DESCRIPTION OF THE PREFERRED EMBODIMENTS

The following will describe in detail embodiments of the present invention with reference to the drawings.

### First Embodiment

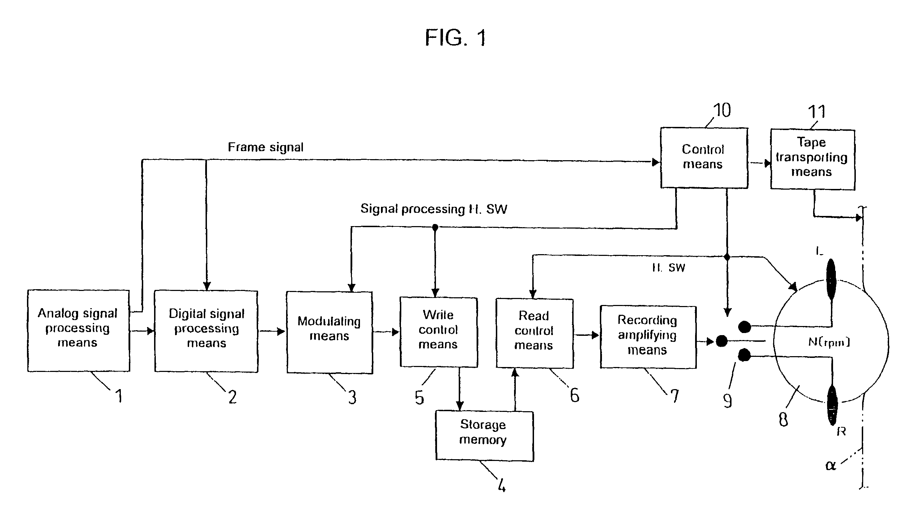

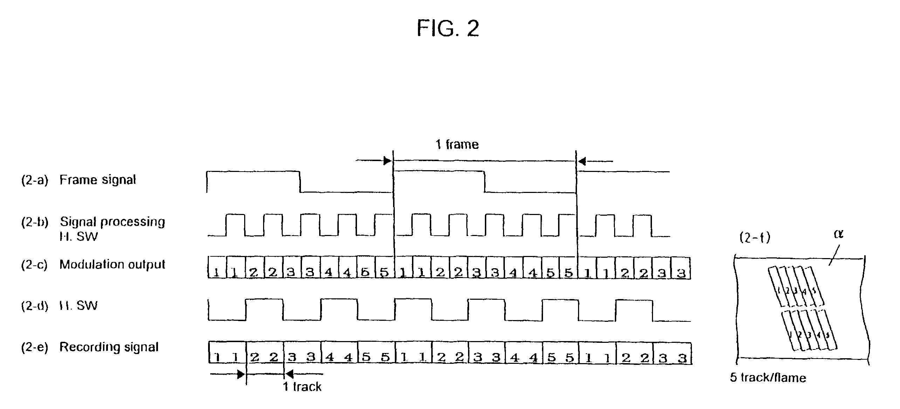

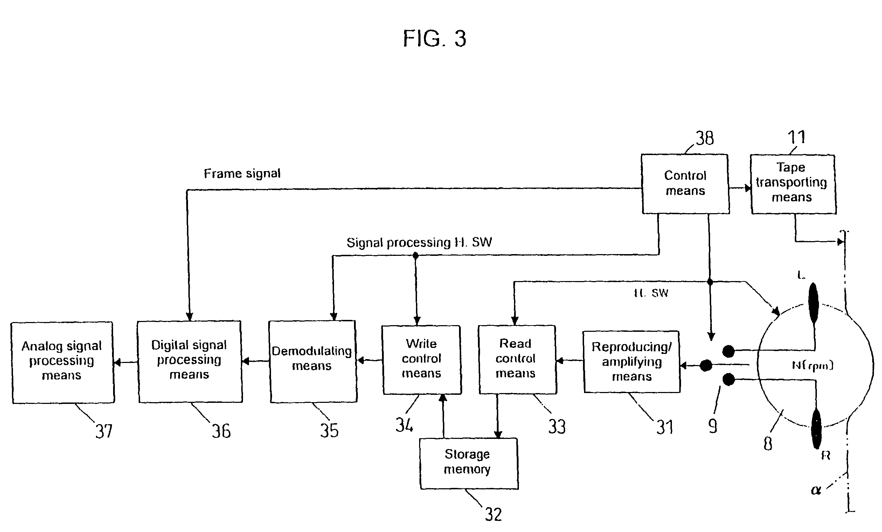

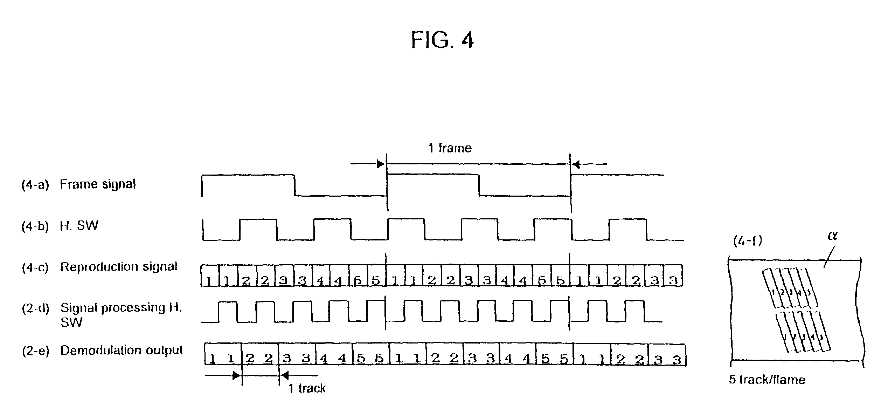

FIG. 1 shows a configuration required for recording in a magnetic recorder/reproducer according to a first embodiment of the present invention, FIG. 2 shows recording operations by the first embodiment, FIG. 3 shows a configuration required for reproduction by the first embodiment, and FIG. 4 is a timing chart for describing reproducing operations by the first embodiment.

Such a configuration of a magnetic recorder/reproducer of this embodiment that is required for recording a signal on a recording tape α includes an analog signal processing means 1, a digital signal processing means 2, a modulating means 3, a storage memory 4, a write control means 5, a read control means 6, a recording/amplifying means 7, a head cylinder 8, a switching means 9, a control means 10, and a tape transporting means 11.

The analog signal processing means 1 performs analog processing and digital conversion on an incoming image input signal. The digital signal processing means 2 performs compression and error-correcting code addition processing on the data digitized at the analog signal processing means 1. The modulating means 3 modulates digital data compressed and provided with an error-correcting code so that it may be recorded on the recording tape α. The storage memory 4 temporarily stores a modulation signal output from the modulating means 3. The write control means 5 controls an operation of writing data to the storage memory 4. The read control means 6 controls an operation of reading data from the storage memory 4. The recording/amplifying means 7 amplifies a modulation output read out from the storage memory 4. The head cylinder 8 records an output of the recording/amplifying means 7 on the recording tape α. The switching means 9 makes switching between the right and left heads of the head cylinder 8 to either one of which an output of the recording/amplifying means 7 is to be supplied. The control means 10 controls an operation of recording a variety of signals. The tape transporting means 11 controls transportation of the recording tape α. The control means 10 controls the rotational speed of, especially, the head cylinder 8 at an arbitrary value.

In FIG. 2, (2-a) indicates a frame signal contained in an image input signal. (2-b) indicates a signal processing H.SW signal recorded in synchronization with the frame signal. (2-c) indicates an output of the modulating means 3 (hereinafter called modulation output). (2-d) indicates an H.SW signal for controlling switching by the switching means 9, a rotational period of the head cylinder 8, and a read timing at the read control means 6. The H.SW signal (2-d) has its half period corresponding to one track on the recording tape α. (2-e) indicates a recording signal recorded on the recording tape α. (2-f) indicates a conceptual diagram of a track and a frame recorded on the recording tape α.

A configuration required for reproduction in this magnetic recorder/reproducer includes a reproducing/amplifying means 31, a storage memory 32, a write control means 33, a read control means 34, a demodulating means 35, a digital signal processing means 36, an analog signal processing means 37, a control means 38, and a tape transporting means 39.

The reproducing/amplifying means 31 amplifies a reproduction signal taken in from the recording tape α via the head cylinder 8 and the switching means 9. The storage memory 32 temporarily stores an reproduction/amplification output provided from the reproducing/amplifying means 31. The write control means 33 controls an operation of writing a reproduction/amplification output to the storage memory 32. The read control means 34 controls an operation of reading a reproduction/amplification output from the storage memory 32. The demodulating means 35 demodulates a reproduction/amplification output read out from the storage memory 32. The digital signal processing means 36 performs decompression and error correcting processing on an amplification output provided from the demodulating means 35. The analog signal processing means 37 outputs to the outside of the relevant apparatus an image signal output from the digital signal processing means 36. The control means 38 controls an operation of reproducing the above-mentioned variety of signals. The tape transporting means 39 controls transportation of the recording tape α during reproduction.

In FIG. 4, (4-a) indicates a frame signal at the time of reproduction. (4-b) indicates an H.SW signal which controls rotation of the head cylinder 8 and also a half period of which corresponds to one track on the recording tape α. (4-c) indicates a reproduction signal reproduced from the recording tape α. (4-d) indicates a signal processing H.SW signal for controlling a timing for reading at the read control means 34 and a timing for demodulation at the demodulating means 35. (4-e) indicates a demodulation output provided from the demodulating means 35. (4-f) indicates a conceptual diagram of a track and a frame recorded on the recording tape α.

In this magnetic recorder/reproducer, one example of the input signal converting means is constituted of the analog signal processing means 1, the digital signal processing means 2, the modulating means 3, and the control means 10. One example of the recording means is constituted of the recording/amplifying means 7, the switching means 9, the head cylinder 8, the control means 10, and the tape transporting means 11. One example of the first write control means is constituted of the write control means 5. One example of the first read control means is constituted of the read control means 6. One example of the first memory means is constituted of the storage memory 4. One example of the output signal converting means is constituted of the analog signal processing means 37, the digital signal processing means 36, the demodulating means 35, and the control means 38. One example of the reproducing means is constituted of the reproducing/amplifying means 31, the switching means 9, the head cylinder 8, the control means 38, and the tape transporting means 11. One example of the second write control means is constituted of the write control means 33. One example of the second read control means is constituted of the read control means 34. One example of the second memory means is constituted of the storage memory 32. This configuration of those means, however, is just one possible example and, of course, the present invention is not limited to this.

The magnetic recorder/reproducer having this configuration records and reproduces a signal as follows. The following will describe a case where based on an image signal of the NTSC broadcasting system, such a digital signal is generated that matches the general digital video signal specifications (10 tracks/frame of recording/reproducing operations) and then recorded on and reproduced from the recording tape α in a recording/reproducing format of five tracks/frame.

First, recording operations are described. An image input signal provided from the outside is applied to the analog signal processing means 1, where it has its pedestal level fixed at a constant level and then is subdivided into a luminance signal, a color signal, and a color difference signal. In this state, the image input signal is converted into a digital signal. Specifically, the analog signal processing means 1 generates the frame signal (2-a) from the image input signal and supplies it to the digital signal processing means 2 and the control means 10. The frame signal (2-a) serves to provide a proper timing in operation between the digital signal processing means 2 and the analog signal processing means 1 and also in operation between a mechanism portion (including the head cylinder 8, the switching means 9, etc.) and the analog signal processing means 1.

In order to conduct more detailed timing control, the control means 10, when having received the frame signal (2-a), generates from the frame signal (2-a) the signal processing H.SW signal (2-b) indicating a modulation timing or a write timing for the storage memory 4 and supplies it to the modulating means 3 and the write control means 5. Similarly, the control means 10 generates the H.SW signal (2-d) which serves as a reference for a head switching timing, a reference of the rotational speed of the head, and a read timing reference and supplies it to the head cylinder 8, the switching means 9, and the read control means 6.

The control means 10 generates as the signal processing H.SW signal (2-b) a signal which has five times the frequency of the frame signal (2-a) and is synchronized with it. Also, the control means 10 generates as the H.SW signal (2-d) a signal which has a half the frequency of the signal processing H.SW signal (2-b) (i.e., 2.5 times the frequency of the frame signal (2-a)) and also is synchronized with the frame signal (2-a).

The frequencies (rotational speeds) of the signal processing H.SW signal (2-b) and the H.SW signal (2-d) are described later.

A digital image signal output from the analog signal processing means 1 is compressed and provided with an error correcting code at the digital signal processing means 2 and then modulated at the modulating means 3 to have an energy distribution corresponding to the properties of the recording tape α. Specifically, the modulation output (2-c) is provided from the modulating means 3 in a state that matches an output format of 10 tracks/frame synchronized with the frame signal (2-a). That is, according to the NTSC broadcasting system, the frame signal (2-a) has a frequency of 29.97 Hz, while the signal processing H.SW signal (2-b) has a frequency of 149.85 Hz, which is five times that of the frame signal (2-a). Moreover, the signal processing H.SW signal (2-b) has its half period corresponding to one track on the recording tape α, so that the modulation output (2-c) is provided from the modulating means 3 in an output format of 10 tracks/frame that matches the general digital video signal standard. Thus, the modulating means 3 generates and provides the modulation output (2-c) in an output format of 10 tracks/frame that matches the general digital video signal standard. Note here that this modulation output (2-c) corresponds to the recording signal.

The modulation output (2-c) provided from the modulation means 3 is written by the write control means 5 into the storage memory 4. Specifically, the write control means 5 uses the signal processing H.SW signal (2-b) to control the write timing, so that the modulation output (2-c) is written into the storage memory 4 as held in an output format of 10 tracks/frame that matches the general digital video signal standard.

The modulation output (2-c) written in the storage memory 4 is read out by the read control means 5 from the storage memory 4 and supplied to the recording/amplifying means 7. In this case, the read control means 6 uses the H.SW signal (2-d) to control the read timing. The H.SW signal (2-d) used here has been set to have half the frequency of the signal processing H.SW signal (2.5 times the frequency of the frame signal (2-a)) as mentioned above, so that the modulation output (2-c) is read out from the storage memory not in an output format (10 tracks/frame) that matches the general digital signal standard but in a format of 5 tracks/frame, which matches the half-frequency setting, and then is supplied to the recording/amplifying means 7.

The recording/amplifying means 7 sets a recording current etc. for the modulation output (2-c) so as to maximize in utilization the performance of the recording tape α. Then, thus set modulation output (2-c) is supplied to the switching means 9. According to the frequency of the H.SW signal (2-d), the switching means 9 makes such switching as follows. That is, the switching means 9 provides switching control so as to supply the modulation output (2-c) alternately to the heads L and R (which are provided at the two radial ends of the peripheral surface) of the head cylinder 8. In this case, the switching frequency is synchronized with the frequency of the H.SW signal (2-d). The H.SW signal (2-d) serves as the switching period reference for the switching means 9 and has its half period corresponding to one track (recording contents distributed to either one of the heads L (and R)).

Thus, the switching means 9 makes switching and synchronizes the rotational speed of the head cylinder 8 with the H.SW signal (2-d). Then, the H.SW signal (2-d) provides a rotational speed reference of the head cylinder 8 as well as a switching period reference of the switching means 9 and has its half the period corresponding to one track (recording contents distributed to either one of the heads L (and R)). Accordingly, the head cylinder 8 rotates at half a rotational speed (which is determined by the signal processing H.SW signal) assumed in modulation processing. By writing the modulation signal (2-c) on the recording tape α in this state, it can be recorded thereon as the recording signal (2-e) having five times the frequency of the image input signal.

Then, two tracks of information contained in the modulation output (2-c) is recorded in each track, so that the modulation output (2-c) given in an output format of 10 tracks/frame is converted into a signal of an output format of five tracks/frame and recorded on the recording tape α.

In this case, the control means 10 and the read control means 6 set the output format of five tracks/frame of the recording signal (2-e) as follows. That is, a number (5) obtained by dividing an integer (10) which is the number of tracks in the 10 tracks/frame format by an appropriate divisor (2) smaller than the number of tracks (10) is set as the number of deletion tracks, thus determining the output format of five tracks/frame. This causes each track of the recording tape α to be subdivided into two track-subdivided regions, each of which records the next signal. That is, signal regions arranged in the modulation output (2-c) so as to constitute a recording track are orderly distributed into each track-subdivided region, thus enabling keeping a good level of the recording/reproducing accuracy.

Also, in this case, the tape transporting means 11 sets the tape transporting speed as follows. That is, if the head cylinder 8 is lowered in rotational speed with the tape transporting speed set at a constant value, the inter-recording track pitch given on the recording tape α (pitch between the recording tracks adjacent in the longitudinal direction of the tape) is enlarged more than necessary to thereby enlarge the length of the recording tape α required in recording, thus leading to such a disadvantage as deterioration in the utilization efficiency of the tape. To guard against this, if the rotational speed of the head cylinder 8 is decreased, the tape transporting means 11 adjusts (decreases) the tape transporting speed correspondingly.

The precision of a mechanism (not shown) for rotating the head cylinder 8 is dependent on the rotational speed of the head. This magnetic recorder/reproducer, therefore, sets the rotational speed of the head cylinder 8 lower (1/2) than a rotational speed (which is determined by the signal processing H.SW signal) prescribed at the generation of the modulation output (2-c) to thereby reduce the required precision of this rotating mechanism for rotating the head cylinder 8, thus reducing the costs. Also, to avoid obligation of conducting high-accuracy periodic maintenance required for high-speed rotation of the head cylinder 8, the rotational speed of the head cylinder 8 is set lower than that corresponding to the modulation processing, thus reducing the costs that much.

Also, in this magnetic recorder/reproducer, the storage memory 4 which serves as a buffer memory is provided between the modulating means 3 and the recording/amplifying means 7. Then, the write control means 5 provides control so that a timing for writing the modulation output (2-c) into the storage memory 4 may be a write timing (which is determined by the signal processing H.SW signal) corresponding to such a number of tracks per frame that is prescribed in the modulation processing etc. Further, the read control means 6 provides control so that a timing for reading the signal from the storage memory 4 out to the recording/amplifying means 7 may be a timing (which is determined by the H.SW signal) corresponding to the number of deletion tracks (five tracks/frame). This enables transmission and reception of the modulation output at a high accuracy between the modulating means 3 and the recording/amplifying means 7.

Further, the write control means 5 is configured so as to be able to finely adjust a timing for writing the modulation output to the storage memory 4. This enables arranging data on the recording tape α so that the data may be acquired easily during a search operation not involving on-tracking when the data recorded on the recording tape α is reproduced. Also, the read control means 6 is configured to be able to finely adjust a timing for reading the modulation output from the storage memory 4, thus giving almost the same effects as those obtained by finely adjusting the write timing of the write control means 5.

Next, the reproducing operations are described. In reproduction, the control means 38 generates the H.SW signal (4-b) and the signal processing H.SW signal (4-d) based on the frame signal (4-a) generated inside or outside the apparatus. The H.SW signal (4-b) provides a reference for the rotational period of the head cylinder 8, a reference for the switching period timing of switching mean 9, and also a reference for the write period timing of the write control means 33. The signal processing H.SW signal (4-d) provides a reference for the read period timing from the storage memory 32 to the read control means 34 and also a modulation timing of the modulating means 35.

The control means 38 supplies thus generated H.SW signal (4-b) to the head cylinder 8 and the switching means 9 and also the signal processing H.SW signal (4-d) to the read control means 34 and the demodulating means 35.

In this state, the head cylinder 8 is rotated to thereby reproduce the recording signal (2-e) recorded on the recording tape α. In this case, by synchronizing the rotational speed of the head cylinder 8 with the H.SW signal (4-b), the recording signal (2-e) is reproduced. That is, as mentioned above, the recording signal (2-e) is recorded on the recording tape α in a signal format of five tracks/frame. With this, by setting the frequency (74.85 Hz in the case of the NTSC broadcasting system) of the H.SW signal (4-b) to be supplied to the head cylinder 8 and the switching means 9 at a value 2.5 times the frequency [29.94 Hz in the case of the NTSC broadcasting system] of the frame signal (4-a), the recording signal (2-e) is reproduced in the signal format into the reproduction signal (4-c), which is supplied to the reproducing/amplifying means 31.

The reproducing/amplifying means 31 amplifies the incoming reproduction signal (4-c) and supplies its reproduction/amplification output to the write control means 33. The write control means 33 writes thus supplied reproduction/amplification output to the storage memory 32 as controlling a write timing. The write control means 33 specifically controls the write timing using the H.SW signal (4-b), so that the reproduction/amplification output is written into the storage memory 32 as held in a five-tracks/frame recording format of the recording signal (2-e).

The reproduction/amplification output written in the storage memory 32 is read out from the storage memory 32 by the read control means 34, which controls a read timing, and then supplied to the demodulating means 35. In this case, the read control means 34 controls the read timing using the signal processing H.SW signal (4-d). The frequency of the signal processing H.SW signal (4-d) is set at double (five times the frequency of the frame signal (4-a)) the frequency of the H.SW signal (4-b), so that the reproduction/amplification output is read out from the storage memory 32 in a signal format that matches the output format of 10 tracks/frame (general digital video signal standard) and then supplied to the demodulating means 35.

The demodulating means 35 demodulates the signal modulated according to the properties of the recording tape α during recording and supplies its demodulation output (4-e) to the digital signal processing means 22. In this case, the demodulating means 35 performs demodulation as synchronized with the signal processing H.SW signal (4-d) to thereby generate the demodulation output (4-e) in a state that matches the 10-tracks/frame output format (general digital video signal standard) using the recording signal (2-e) [five-tracks/frame signal format] and then supplies it to the digital signal processing means 36.

The digital signal processing means 36 performs error correcting, error modifying, compressed-data decompression processing etc. on the incoming demodulation output (4-e) and supplies a result thereof to the analog signal output processing means 37. In this case, the digital signal processing means 36 processes the signal in synchronization with the frame signal (4-a) supplied from the control means 38.

The analog signal output processing means 37 converts the incoming output of the digital signal processing means 36 into an analog signal and outputs it to the outside of the apparatus as the reproduction image signal (output signal).

Thus, the magnetic recorder/reproducer according to this embodiment operates as follows. That is, first the modulating means 3 generates the modulation output (2-c) that matches a 10-tracks/frame rate, which is the general digital video signal standard. Then, the modulation output (2-c) is processed to have an output format of five tracks/frame which has the equal number of tracks (number of deletion tracks) reduced to a half of the number of the above-mentioned output format and recorded on the recording tape α. Therefore, each track of the recording tape α records therein two tracks of a digital video signal in its general output format. In reproduction, it is demodulated into the demodulation output (4-e) that matches the 10-tracks/frame rate, which is the general digital video signal standard.

Thus, the recording signal (2-e) recorded on the recording tape α can be reproduced accurately. In reproduction, the rotational speed of the head cylinder 8 can be set lower than that prescribed at the time of generating the recording signal or the output signal, thus reducing a required precision of the rotating mechanism of the head cylinder 8. Thus, it is possible to reduce the required precision of the mechanism for rotating the head cylinder 8 to thereby reduce the costs and also to simply the maintenance for the head cylinder 8 to further reduce the costs.

Also, the tape transporting means 11 can adjust the speed of transporting the recording tape α during reproduction according to the rotational speed of the head cylinder 8, thus accurately reproducing the recording signal (2-e) recorded on the recording tape α.

Further, in this magnetic recorder/reproducer, the storage memory 32 serving as a buffer memory is provided between the reproducing/amplifying means 31 and the demodulating means 34. In this configuration, the write control means 33 provides control so that the timing for writing the reproduction signal (4-c) into the storage memory 32 may be a write timing (which is determined by the H.SW signal (4-b)) corresponding to the signal format (five tracks/frame) of the reproduction signal (4-c). Further, the read control means 34 provides control so that the read timing for reading the signal from this storage memory 31 to the demodulating means 35 may be a read timing (which is determined by the signal processing H.SW signal (4-d)) corresponding to the number of tracks per frame (10 tracks/frame) prescribed in the modulation/demodulation processing. This enables transmitting and receiving the reproduction signal (4-c) at a high accuracy between the demodulating means 35 and the reproducing/amplifying means 31.

Further, the write control means 33 is configured so as to be able to finely adjust the timing for writing the reproduction signal (4-c) into the storage memory 32. Accordingly, it is possible to restore the recording track on the recording tape α finely adjusted during recording to its prior timing, thus arranging data on the recording tape α so that it may be acquired easily during, for example, a search operation not involving on-tracking when the signal on the recording tape α is reproduced.

Further also, the read control means 34 is configured so as to be able to finely adjust the timing for reading the reproduction signal (4-c) from the storage memory 32, thus giving almost the same effects as those by finely adjusting the write timing of the write control means 33.

Thus, in this magnetic recorder/reproducer, the head cylinder 8 rotates at the same frequency as that of the H.SW signals (2-d, 4-b), which is 2.5 times the frequency of the frame signals (2-a, 4-a). In the case of recording/reproduction according to the general digital video signal standard, on the other hand, as described with the prior art example, the head cylinder 8 rotates at five times the frequency of the frame signals (8-a, 10-a). Accordingly, in the magnetic recorder/reproducer according to this embodiment, the rotational period of the head cylinder 8 can be decreased to 1/2 of the prior art value, thus simplifying the mechanism configuration and reducing the manufacturing costs by that much.

Also, to keep a high precision of the mechanism for supporting the head cylinder 8 operating at a high-speed, the maintenance necessarily becomes labor intensive during operation, thus contributing a rise in the running cost of the magnetic recorder/reproducer; to guard against it, this embodiment reduces the rotational period of the head cylinder 8 to eliminate the labor-intensive maintenance, thus enabling reducing the running cost.

Also, as mentioned above, to enhance the recording/reproducing accuracy, this magnetic recorder/reproducer is adapted to adjust the arrangement of data in each track of the recording tape α (which records two tracks of a signal region at the time of signal processing) when each track contents are recorded/reproduced. The data arrangement can be finely adjusted specifically by adjusting timings for performing writing and reading operations to the storage memories 4 and 32 using the write control means 5 and 33 and the read control means 6 and 34 respectively. If such fine adjustment of the data arrangement is unnecessary, a configuration of the storage memories 4 and 32 may be removed including the write control means 5 and 33 and the read control means 6 and 34.

In the magnetic recorder/reproducer according to the first embodiment described above, each track of the recording tape α records two tracks of a general digital video signal to thereby double the amount of information recorded in each track and hence double the information recording density in each track, thus possibly disabling writing a sufficient amount of information. Such a case can be accommodated by making such settings as follows. That is, by the general digital video signal standard, a digital video signal needs to employ a recording tape α_{D} with a 1/4 inch width for its recording and reproduction. By the VHS standard for general analog video signals, on the other hand, a recording tape α_{A} with a 1/2 inch width is used. Accordingly, by using a VHS-standard recording tape α_{A} is used to record/reproduce the above-mentioned digital video signal to thereby make the track length of the recording tape α_{A} twice that of the digital signal recording tape α_{D}, it is possible to record in each track two tracks of a signal at a sufficient information density.

Also, in the magnetic recorder/reproducer, there is generally a relationship of λ=V/f among the signal wavelength λ, the tape speed V, and the signal frequency f at the time of recording/reproduction. According to this relationship, as the rotational speed of the head cylinder 8 decreases, the wavelength of a signal recorded on or reproduced from the head cylinder 8 is shortened proportionally. In the case of a component of the magnetic recorder/reproducer (especially, a circuit component used in digital signal processing), generally, as the wavelength of a signal to be handled is shortened, the manufacturing costs increase. Accordingly, in the magnetic recorder/reproducer according to this embodiment in which the rotational period of the head cylinder can be halved with respect to the prior art embodiment, an expensive circuit component capable of accommodating a short wavelength must be used, thus possibly increasing the manufacturing costs.

Even in such a case, for example, by using as the digital video recorder/reproducer a magnetic recorder/reproducer of the VHS standard, which is the general analog video signal standard, the above-mentioned possibility can be eliminated. That is, the head cylinder 8_{D} has a diameter of 21 mm that is used to record/reproduce the recording tape α_{D} according to the general digital video signal standard, whereas the head cylinder 8_{A} has a diameter of 62 mm that is used to record or reproduce the recording tape α_{A} according to the VHS standard, which diameter is about three times as large as that of the former one. As mentioned above, in the magnetic recorder/reproducer, there is generally a relationship of λ=V/f among the signal wavelength λ, the tape speed V, and the signal frequency f at the time of recording/reproduction, and the tape speed V is proportional to the diameter of the head cylinder. Accordingly, if these two head cylinders 8_{D} and 8_{A} are rotated at the same frequency in recording/reproduction, resultantly, the recording/reproduction wavelength λ of the VHS-standard head cylinder 8_{A} is about three times as large as that of the digital-video-standard head cylinder 8_{D}.

Therefore, by applying the configuration of the present invention to a VHS-standard recorder/reproducer, the rotational speed of the head cylinder 8 can be decreased to reduce the wavelength (1/2λ) and, at the same time, its diameter can be enlarged to elongate the wavelength (3λ), so that the recording/reproduction wavelength can be made about 1.5 times (3/2λ) as large as a value in a case of recording/reproduction according to the general digital video signal standard. Accordingly, conversely, the circuit configuration can be simplified to thereby reduce the manufacturing cost.

Thus, this embodiment causes the modulating means 3 and the demodulating means 35 to perform almost the same processing as that by the modulating and demodulating means used in recording/reproduction according to the general digital video tape standard and then reduce the rotational speed of the head cylinder 8 at the time of recording/reproduction (1/2 in this case), thus simplifying the circuit configuration and reducing the costs of the recording tape α.

### Second Embodiment

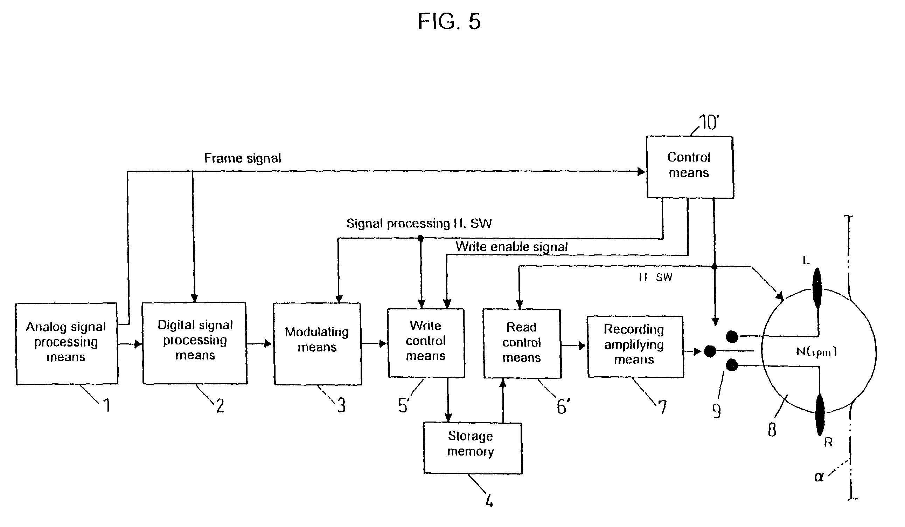

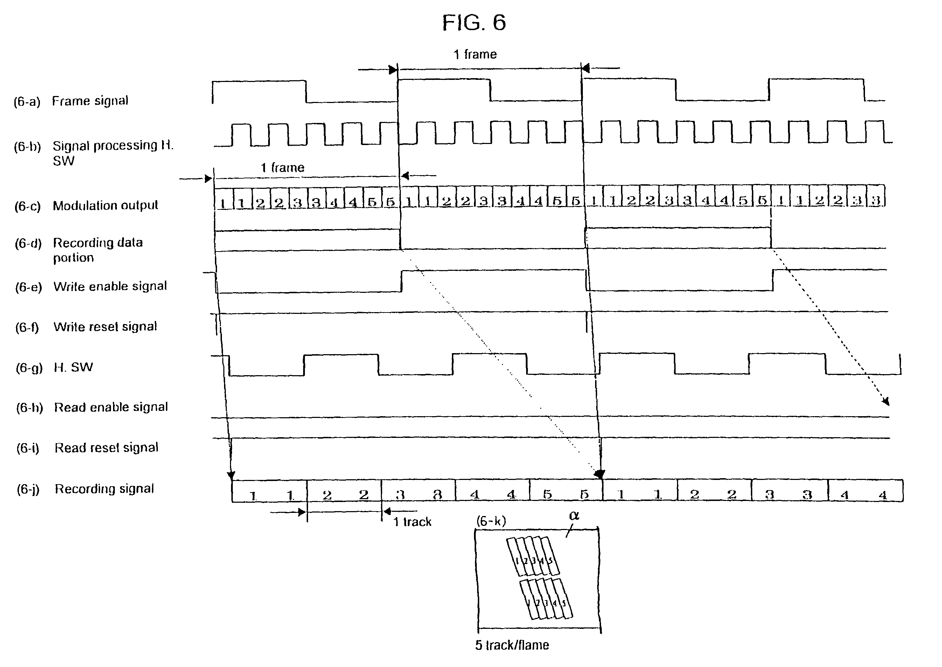

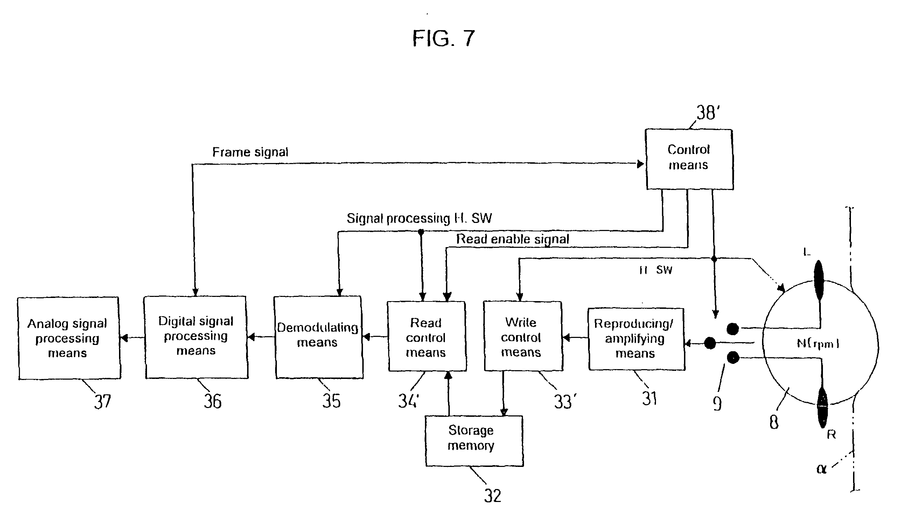

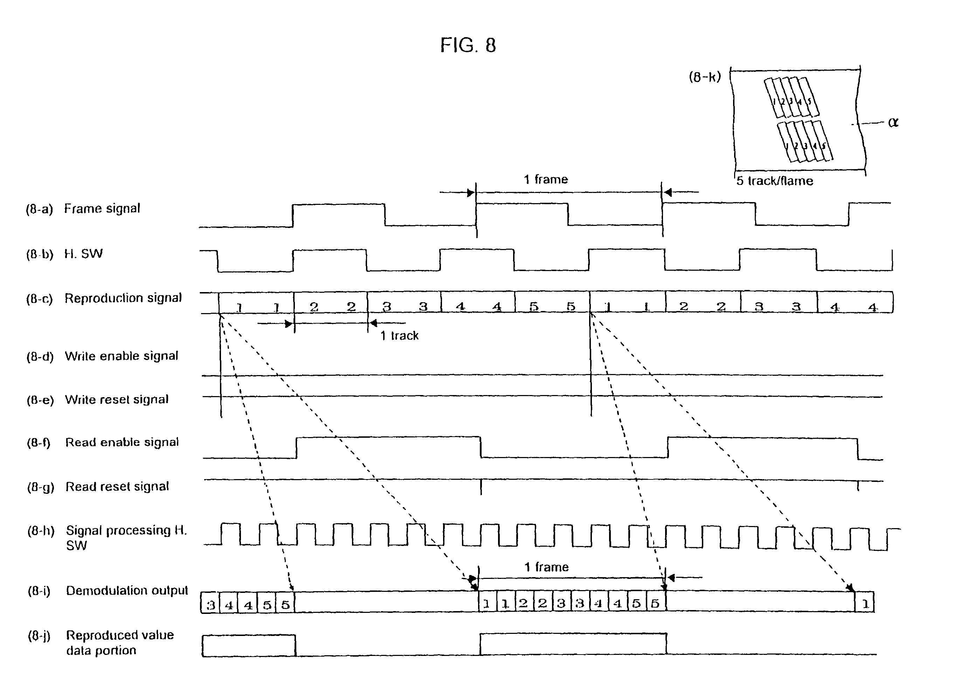

FIG. 5 is an illustration for showing a construction required for recording by the magnetic recorder/reproducer according to a second embodiment of the present invention, FIG. 6 is a timing chart for describing recording operations by the second embodiment, FIG. 7 is an illustration for showing a configuration required for reproduction by the second embodiment, and FIG. 8 is a timing chart for describing reproducing operations by the second embodiment.

This embodiment has essentially the same configuration as that of the first embodiment, over which the same or like elements are indicated by the same reference symbols and so are omitted in explanation.

In FIG. 6, (6-a) indicates a frame signal contained in an image input signal. (6-b) indicates a signal processing H.SW signal recorded on the recording tape α in synchronization with the frame signal (6-a). (6-c) indicates a modulation output generated by permitting the modulating means 3 to modulate an image input signal. (6-d) indicates a recording data portion which indicates such a frame of all the frame constituting an image input signal that is selected to be recorded on the recording tape α. (6-e) indicates a write enable signal which enables selectively writing only a frame selected by the recording data portion (6-d) into the storage memory 4. (6-f) indicates a write reset signal which controls resetting of a write operation to the storage memory 4. (6-g) indicates an H.SW signal which controls a rotation of the head cylinder 8, a switching timing of the switching means 9, and a read timing of a read control means 6' and also which has its half period corresponding to one track on the recording tape α. (6-h) indicates a read enable signal which controls a timing for reading data from the storage memory 4. (6-i) indicates a read reset signal which controls a read timing of the storage memory 4. (6-j) indicates a recording signal which indicates a signal to be recorded on the recording tape α. (6-k) indicates a conceptual diagram of a track and a frame recorded on the recording tape α.

In FIG. 8, (8-a) indicates a frame signal at the time of reproduction. (8-b) indicates an H.SW signal which controls a rotational speed of the head cylinder 8, a switching timing of the switching means 9, and a write timing of a read control means 33' at the time of reproduction and also which has its half period corresponding to one track of the recording tape α. (8-c) indicates a reproduction signal reproduced from the recording tape α. (8-d) indicates a write enable signal which enables selectively writing only a predetermined frame to the storage memory 32. (8-e) indicates a write reset signal which controls resetting of a write operation to the storage memory 32. (8-f) indicates a read enable signal which controls a timing for reading data from the storage memory 32. (8-g) indicates a read reset signal which controls a read timing of the storage memory 32. (8-h) indicates a signal processing H.SW signal which controls a read timing of the read control means 34' and a demodulation timing of the demodulating means 35. (8-i) indicates a demodulation output provided by the demodulating means 35. (8-j) indicates a reproduced valid-data portion which indicates valid data contained in a demodulation output (8-i). (8-k) indicates a conceptual diagram for showing a track and frame recorded on the recording tape α.

The following will describe one example of an optimal recording/reproducing operation by the magnetic recorder/reproducer according to this embodiment. To record/reproduce an NTSC broadcasting-system image input signal in a signal format of 10 tracks/frame used in recording/reproduction of the general digital signals, it is necessary to record data on the recording tape α by rotating the head cylinder 8 at a frequency of 149.85 Hz, which is five times the NTSC broadcasting-system frame frequency of 29.97 Hz. According to the first feature of the second embodiment, either one of each two consecutive frames in an image input signal in such a recording/reproduction format to provide a frame-skipped state in recording/reproduction. Further, according to the second feature of the second embodiment, the rotational speed of the head cylinder 8 is set at 37.46 Hz, which is 1/4 of such a rotational speed (149.85 Hz) of the head cylinder 8 that is applied in recording/reproduction of general digital video tapes.

First, the recording operation is described as follows. An image input signal fed from the outside is input to the analog signal processing means 1, where it has its pedestal level fixed at a constant value and then is subdivided into a luminance signal, a color signal, and a color difference signal. In this state, the image input signal is converted into a digital signal. In this case, the analog signal processing means 1 generates the frame signal (6-a) from the image input signal and supplies it to the digital signal processing means 2 and a control means 10'. The frame signal (6-a) is generated specifically for providing a proper operational timing between the digital signal processing means 2 and the analog signal processing means 1 and also between the head cylinder 8 or a mechanism portion (the head cylinder 8, the switching means 9, etc.) and the analog signal processing means 1. In the case of the NTSC broadcasting standard, the frame frequency is 29.97 Hz, so that the frame signal (6-a) is set at a frequency of 29.97 Hz.

To provide more detailed timing control, the control means 10', when having received this frame signal (6-a), generates the signal processing H.SW signal (6-b) indicating a modulation timing or a timing for writing data to the storage memory 4 based on the frame signal (6-a) and then supplies it to the modulating means 3 and a write control means 5'. At the same time, the control means 10' generates the H.SW signal (6-g) which serves as a switching timing reference for the head, a reference of the head's rotational speed, and a read timing reference and then supplies it to the head cylinder 8, the switching means 9, and the read control means 6'.

The control means 10' generates as the signal processing H.SW signal (6-b) a signal (with a frequency of 149.85 Hz in the case of the NTSC broadcasting system) which has five times the frequency of the frame signal (6-a) and also which is synchronized therewith. Further, the control means 10' generates as the H.SW signal (6-g) a signal (with a frequency of 37.46 Hz) which has 1/4 of the frequency of the signal processing H.SW signal (6-b) (1.25 times the frequency of the frame signal (6-a)) and also which is synchronized with the frame signal (6-a).

The digital image signal output from the analog signal processing means 1 undergoes compression and error-correcting code addition processing at the digital signal processing means 2 and then is modulated at the modulating means 3 so as to have an energy distribution corresponding to the properties of the recording tape α. Specifically, the modulation output (6-c) is provided from the modulating means 3 in such a signal format that matches a signal format of 10 tracks/frame synchronized with the signal processing H.SW signal (6-b) based on a frame length determined by the frame signal (6-a). That is, according to the NTSC broadcasting system, the frame signal (6-a) has a frequency of 29.97 Hz, so that the signal processing H.SW signal (6-b) has a frequency of 149.85 Hz, which is five times the frequency of the frame signal (6-a). Since the signal processing H.SW signal (6-b) has its half period corresponding to one track of the recording tape α, the modulation output (6-c) is output in the signal format that matches the general digital video signal standard of 10 tracks/frame. Thus, the modulating means 3 generates and outputs the modulation output (6-c) having a signal format that matches the general video signal standard of 10 tracks/frame.

The modulation output (6-c) provided from the modulating means 3 is written by the write control means 5' into the storage memory 4. In this case, the write control means 5' controls a write timing using the signal processing H.SW signal (6-b), so that the modulation output (6-c) is written into the storage memory 4 in a state that matches the general digital video signal standard f 10 tracks/frame.

In this case, further, the write control means 5' has its write operation controlled by the write enable signal (6-e) supplied from the control means 10'. That is, the write enable signal (6-e) has such a format as to alternately enable and disable a write operation for each frame the length of which is regulated by the frame signal (6-a). Accordingly, the write control means 5' which has its write operation controlled by this write enable signal (6-e) writes the modulation output (6-c) into the storage memory 4 as held in a frame-skipped state. That is, the write control means 5' takes out one frame of data from consecutive two frames of data and writes it into the storage memory 4.

A modulation output (6-c)' stored in the storage memory 4 as held in the frame-skipped state is read out from the storage memory 4 by the read control means 6 and supplied to the recording/amplifying means 7. In this case, the read control means 6' controls the timing using the H.SW signal (6-g). That is, since the H.SW signal (6-g) has its half period corresponding to 1/4 of the period of the signal processing H.SW signal (6-b), a track length determined by this H.SW signal (6-g) is four times a track length determined by the signal processing H.SW signal (6-b). Further, the rotational speed of the head cylinder 8 determined by the H.SW signal (6-g) is 1/4 of that of the head cylinder assumed by the signal processing H.SW signal (6-b). Accordingly, the modulation output (6-c)' is read out from the storage memory 4 not in a 10-tracks/frame signal format of the general digital video signal standard but in a signal format of five tracks/frame and also in a state in which its recording rate of each track has been halved with respect to that at the time of modulation. Thus read out modulation output (6-c)' is supplied to the recording/amplifying means 7.

The recording/amplifying means 7 makes settings of a recording current etc. for the frame-skipped modulation output (6-c)' having the halved recording rate so that the performance of the recording tape α may be maximized. The modulation output (6-c)' having these settings of the recording current etc. is supplied from the recording/amplifying means 7 to the switching means 9.

The switching means 9 makes switching as follows corresponding to a frequency of the H.SW signal (6-g) having the above-mentioned signal format. That is, the switching means 9 controls switching so as to supply the modulation output alternately to the heads L and R (which are provided at the radial two ends of the peripheral face) of the head cylinder 8. The period of this switching is synchronized with that of the H.SW signal (6-g). The H.SW signal (6-g) provides a reference for the switching period of the switching means and has its half period corresponding to one track (recording contents distributed to each of the heads L and R).

Thus, switching is made by the switching means 9 and the rotation of the head cylinder 8 is synchronized with the H.SW signal (6-g). With this, the H.SW signal (6-g) provides a reference for the switching period of the switching means 9 and a reference for the rotation of the head cylinder 8 and also has its half period corresponding to one track (recording contents distributed to each of the heads L and R).

In this state, the frame-skipped modulation output (6-c)' is recorded on the recording tape α to thereby record the recording signal (6-j) having 2.5 times the frequency of the image input signal on the recording tape α in a recording format having the following features:
- skipping (thinning out) one of each two frames;
- signal format of five tracks/frame; and
- half a recording rate of the recording tape α.

By providing a difference between the output period of the modulating means 3 and the write period for the recording tape α and then making these timings coincident with each other by the storage memory 4, it is possible to reduce the rotational speed of the head cylinder 8 to thereby lower the recording wavelength. This enables recording/reproducing of data to the recording tape α that cannot accommodate a high recording rate and also to a mechanism of the magnetic recorder/reproducer. Further, the recording tape α is capable of prolonged recording such as frame-skipped monitor recording.

Also, since the rotational speed of the head cylinder 8 is set at 1/4 of that supposed by the signal processing H.SW signal (6-b), like by the first embodiment, this embodiment can simplify a required extra configuration of the head cylinder 8.

Next, reproducing operations are described. In reproduction, a control means 38' generates the H.SW signal (8-b) and the signal processing H.SW signal (8-h) based on the frame signal (8-a) generated inside or outside of the apparatus. The H.SW signal (8-b) serves as a rotation reference for the head cylinder, a switching timing reference for the switching means 9, and a write timing reference for the write control means 33'. The signal processing H.SW signal (8-h) serves as a reference of a timing for the read control means 34' when reading data from the storage memory 4 and a demodulation timing for the demodulating means 35.

The control means 38' supplies thus generated H.SW signal (8-b) to the head cylinder 8, the switching means 9, and the write control means 33'. Further, control means 38' supplies the signal processing H.SW signal (8-h) to the read control means 34' and the demodulating means 35.

In this state, the head cylinder 8 is rotated to thereby reproduce the recording signal (6-j) recorded on the recording tape α. In this case, by synchronizing the rotational speed of the head cylinder 8 with the H.SW signal (8-b), the recording signal (6-j) is reproduced in the same signal format as that at the time of recording. That is, as mentioned above, the recording signal (6-j) is recorded on the recording tape α with the following features:
- skipping one of each two frames of image input signal;
- signal format of five tracks/frame; and
- half a recording rate at the time of modulation.

With this, by providing the H.SW signal (8-b) supplied to the head cylinder 8 and the switching means 9 with the same period as that of the H.SW signal (6-g) in the above-mentioned configuration at the time of recording, the recording signal (6-j) is reproduced in the same signal format and also at the same recording rate to supply the resultant reproduction signal (8-c) to the reproducing/amplifying means 31. Specifically, the H.SW signal (8-b) is generated to have 1.25 times the frequency [29.97 Hz according to the NTSC broadcasting system] of the frame signal (8-a) (37.46 Hz according to the NTSC broadcasting system), in synchronization with which signal H.SW signal (8-b) is generated the recording signal (8-c).

The reproducing/amplifying means 31, for example, amplifies the incoming reproduction signal (8-c) and then supplies it to the write control means 33'. The write control means 33' writes the incoming output of the reproducing/amplifying means 31 into the storage memory 32 as controlling a write timing. In this case, the write control means 33' controls the write timing using the H.SW signal (8-b), so that the output of the reproducing/amplifying means 31 is written into the storage memory 32 as held in a signal format of the recording signal (6-j).

The output of the reproducing/amplifying means 31 stored in the storage memory 32 is read out therefrom by the read control means 34', which controls a read timing, and then supplied to the demodulating means 35. In this case, the read control means 34' has its read timing controlled by the signal processing H.SW signal (8-h). At this point in time, as mentioned above, this signal processing H.SW signal (8-h) has been set to have four times the frequency of the H.SW signal (five times of frame signal (8-a)), so that such an output is read out from the storage memory 32 that has a signal format which matches the (general digital video signal standard) output format of 10 tracks/frame and then supplied to the demodulating means 35.

Further, at the same time, the read control means 34' has its read operation controlled by the read enable signal (8-d) supplied from the control means 38'. That is, from the storage memory 32 is output the reproduction signal (8-c) having a signal format of five tracks/frame as converted into a signal format of 10 tracks/frame and as changed to have double recording rate at the time of recording. Accordingly, the output of the storage memory 32 is provided in a state where one of each two frames thereof is skipped.

The read enable signal (8-f), on the other hand, is in such a signal format as to alternately enable and disable a read operation for each frame, so that the read control means 34' which has its read operation of controlled by this read enable signal (8-f) selectively reads out such data of an output provided in a frame-skipped state from the storage memory 32 that is present in only a valid signal region. That is, the read control means 34' selectively picks up only such data pieces of consecutive two frames of data that are of a valid frame and reads them out from the storage memory 32.

The demodulating means 35 demodulates a signal modulated at the time of recording according to the recording tape α and supplies its demodulation output (8-i) to the digital signal processing means 36. In this case, the demodulating means 35 demodulates it in synchronization with the signal processing H.SW signal (8-h) to thereby generate the demodulation output (8-i) as held at a 10-tracks/frame rate (which is the general digital video signal standard) and then supplies it to the digital signal processing means 36.

The digital signal processing means 36 performs error correcting, error modifying, and data decompression on the incoming demodulation output (8-i) and supplies it to the analog signal output processing means 37. In this case, the digital signal processing means 36 processes the signal in synchronization with the frame signal supplied from the control means 38.

The analog signal output processing means 37 converts the incoming output of the digital signal processing means 36 into an analog signal and outputs it as a reproduction image signal.

Thus, in the magnetic recorder/reproducer according to this embodiment, the modulating means 3 generates the modulation output (6-c) that matches a 10-tracks/frame rate according to the general digital video tape standard and then records it on the recording tape α at 1/4 of the rate of this output format. Specifically, it is recorded on the recording tape α at a five-tracks/frame rate and in a state where one of each two frames is skipped. Therefore, each track of the recording tape α records therein two tracks of a signal in the general digital video tape output format. In this case, moreover, it is recorded at such a rate that one of each two frames is skipped. In reproduction, it is restored to the demodulation output (8-i) that matches the general digital video tape standard output format of 10 tracks/frame and then output.

In this case, the head cylinder 8 rotates at the same rotational speed as the frequency of the H.SW signal (6-g, 8-b), which is 1.25 the frequency of the frame signal (6-a, 8-a). In recording/reproduction according to the general digital video tape standard, on the other hand, as described with the prior art example, the head cylinder 8 rotates at five times the frequency of the frame signal (8-a, 10-a). Accordingly, in the magnetic recorder/reproducer according to this embodiment, the rotational speed of the head cylinder 8 can be lowered to 1/4 of that of the prior art example to thereby simplify the mechanism configuration by that much, thus reducing the manufacturing costs.

Also, to keep a high precision of a mechanism for supporting the head cylinder 8 operating at a high speed, maintenance during operation takes much of labor necessarily, thus contributing to a rise in the running cost of the magnetic recorder/reproducer. In this embodiment, however, the rotational frequency of the head cylinder 8 can be reduced to thereby eliminate such labor-intensive maintenance, thus reducing the running cost by that much.

Also, the recording tape α needs only to accommodate a relatively low recording rate of half the rate at the time of modulation, thus enabling reducing manufacturing costs thereof.

Also, in the magnetic recorder/reproducer of this embodiment, to arrange data on a recording tape so as to be able to be easily acquired during search not involving on-tracking when contents recorded on the recording tape are reproduced in order to enhance the above-mentioned recording/reproducing accuracy, it is necessary to match relative timings in recording and reproduction of two tracks of a signal recorded in each track (which indicate two tracks of a general digital video signal). Specifically, it is necessary to finely adjust the mutual relative positions of each two tracks of a signal arranged in each track. Such fine adjustment of the relative positions can be achieved by adjusting writing and reading timings to the storage memories 4 and 32 using the write control means 5 and 33 and the read control means 6 and 34 respectively.

In the above-mentioned magnetic recorder/reproducer according to the second embodiment also, each track of the recording tape α records therein two tracks of the general digital video signal. Accordingly, the amount of information recorded in each track doubles to thereby double the density of information written in each track, thus possibly disabling writing a sufficient amount of information on the recording tape α.

In such a case also, like with the first embodiment, by causing the magnetic recorder/reproducer mechanism and the recording tape α to match the VHS standard or other existing analog video signal standards, troubles can be solved.

Although the above-mentioned embodiments have been described with reference to a case where each frame consists of five tracks (five tracks/frame), it is possible to provide a 10-tracks/frame rate by changing the cylinder's rotational speed or a read clock period of the storage memories 4 and 32. Also, although the second embodiment has employed a two-frame period for the read reset signal, the same data in a one-frame period may be read out two frames repeatedly to provide all-frame valid data.

Also, those two embodiments have been described with reference to a case where one example of the recording means is comprised of a recording/amplifying means, a switching means, a head cylinder, a control means, and a tape transporting means and a modulated output from the recording/amplifying means is alternately supplied by the switching means to the heads L and R of the head cylinder according to a period of the H.SW signal. However, the recording means may be comprised of the recording/amplifying means, the head cylinder, the control means, and the tape transporting means and the output of the recording/amplifying means may be supplied to the head cylinder not through the switching means. In this case, a modulated output from the recording/amplifying means may not be alternately supplied by the switching means to the heads L and R of the head cylinder according to a period of the H.SW signal but be simultaneously to the heads L and R of the head cylinder.

The present invention provides such an advantageous effect that even for a VTR format which requires a high rotational speed of the cylinder, a high recording rate, and a short recording wavelength and also the corresponding dedicated tape and mechanism, by reducing the rotational speed of the head cylinder and the recording wavelength, it is possible to record and reproduce data using an inexpensive general-purpose tape that does not match a high recording rate and a mechanism that does not require high maintenance costs.

## Claims

1. A magnetic recorder/reproducer comprising:
input signal converting means for modulating an input signal at a timing which corresponds to a predetermined number of tracks for each signal section to thereby convert said input signal into a recording signal; and
recording means for rotating a head cylinder at a rotational speed lower than such a rotational speed of said head cylinder that corresponds to said timing in said modulation.

2. The magnetic recorder/reproducer according to Claim 1, further comprising:
reproducing means for reproducing a recording signal recorded on said recording tape by rotating said head cylinder at such a rotational speed of a head that is set by said recording means; and
output signal converting means for converting a reproduction signal output from said reproducing means into an output signal by performing demodulation processing at a timing which corresponds to said predetermined number of tracks for each signal section.

3. The magnetic recorder/reproducer according to Claim 1, wherein said recording means adjusts a transporting speed of said recording tape during recording corresponding to a set rotational speed of said head cylinder.

4. The magnetic recorder/reproducer according to Claim 3, wherein said recording means sets a rotational speed of said head cylinder so that said each signal section may be subdivided into such a number of deletion tracks that is obtained by dividing said predetermined number of tracks for each signal section by an integer smaller than said number of tracks.

5. The magnetic recorder/reproducer according to Claim 4, further comprising:
first memory means;
first write control means for writing said recording signal into said first memory means at a write timing which corresponds to said predetermined number of tracks for each signal section; and
first read control means for reading said recording signal stored in said first memory means at a timing that corresponds to said number of deletion tracks and then supplying said number to said recording means.

6. The magnetic recorder/reproducer according to Claim 5, wherein said first write control means finely adjusts said write timing.

7. The magnetic recorder/reproducer according to Claim 5, wherein said first read control means finely adjusts said read timing.

8. The magnetic recorder/reproducer according to Claim 2, wherein said reproducing means adjusts a transporting speed of said recording tape during reproduction corresponding to a set rotational speed of said head cylinder.

9. The magnetic recorder/reproducer according to Claim 8, further comprising:
second memory means;
second write control means for writing said reproduction signal into said second memory means at a write timing that corresponds to said number of deletion tracks; and
second read control means for reading said reproduction signal stored in said second memory means at a read timing that corresponds to said predetermined number of tracks for each signal section and then supplying said reproduction signal to said output signal converting means.

10. The magnetic recorder/reproducer according to Claim 9, wherein said second write control means finely adjusts said write timing.

11. The magnetic recorder/reproducer according to Claim 9, wherein said read control means according to Claim 2 finely adjusts said read timing.

12. The magnetic recorder/reproducer according to Claim 1, wherein said input signal converting means selectively picks up an input signal of each of a plurality of signal sections and converts said input signal into a recording signal.

13. The magnetic recorder/reproducer according to Claim 12, wherein said recording means records said recording signal on said recording tape at a lowered recording rate of said recording signal.

14. The magnetic recorder/reproducer according to Claim 13, wherein said output signal converting means restores said recording rate lowered by said recording means to an original recording rate when converting said reproduction signal into said output signal.

## Amended claims

### Amended claims under Art. 19.1 PCT

An amendment was already made as follows on Feb. 23, 2001 to the Japanese Patent Office according to the provision stated in the Section 11 of Japanese international patent application law corresponding to PCT rule 34.
Contents of amendment
**1.** Amend "according to Claim 1" in Claim 12 into "according to Claim 2."
**12.** (Amended) The magnetic recorder/reproducer according to Claim 2, wherein said input signal converting means selectively picks up an input signal of each of a plurality of signal sections and converts said input signal into a recording signal.
